# EUROPEAN PATENT APPLICATION

(11) **EP 4 654 121 A1**
(43) Date of publication of application: **26.11.2025**
(21) Application number: 24217072.8
(22) Date of filing: 03.12.2024
(51) Int. Cl.: G06T 3/14, G06T 5/90, G06T 7/30

(54) **METHOD AND MOBILITY DEVICE FOR GENERATING ALIGNED IMAGE DATA THROUGH ALIGNING PARAMETERS GENERATED BY AN IMAGE TRANSFORMATION ARTIFICIAL INTELLIGENCE MODEL**

(30) Priority: 24.05.2024 KR 20240067699
(71) Applicant: Hyundai Motor Company, Seoul 06797 (KR); Kia Corporation, Seocho-gu Seoul 06797 (KR)
(72) Inventor: PARK, Jin Ho, Hwaseong-si, Gyeonggi-do 18280 (KR)
(74) Representative: Viering, Jentschura & Partner mbB Patent- und Rechtsanwälte

(57) **Abstract**

A method for generating aligned image data through an aligning parameter generated by an image transformation artificial intelligence (AI) model includes, through an encoder of the image transformation AI model, generating at least one or more aligning parameters from a first camera property and a second camera property related to a first camera and a second camera respectively. The method also includes, through an image transformer of the image transformation AI model, transforming, based on the at least one aligning parameter and a brightness parameter, first image data photographed by the first camera to be aligned with second image data photographed by the second camera. The method also includes training the encoder and a discriminator of the image transformation AI model by adversarial training. The image transformation AI model discriminates between the transformed first image data and the second image data.

## Description

### CROSS REFERENCE TO RELATED APPLICATION

The present application claims the benefit of and priority to Korean application No. 10-2024-0067699, filed on May 24, 2024, the entire contents of which are incorporated herein by reference.

### TECHNICAL FIELD

The present disclosure relates to a method and a mobility device for generating aligned image data through an aligning parameter generated by an image transformation artificial intelligence (AI) model. More particularly, the present disclosure relates to a method and a mobility device for generating aligned image data through an aligning parameter generated by an image transformation AI model that similarly transforms image data photographed from cameras with different properties by using an adversarial training technique.

### BACKGROUND

A supervised learning-based deep learning model using ground truth image data are being actively used to perform various vision tasks and show high performance as compared to other learning techniques.

However, the supervised learning-based deep learning model requires multiple ground truth image datasets to have sufficient performance, and the economic cost for securing an enormously large amount of ground truth image data increases accordingly.

Thus, the efficiency of data needs to be improved to achieve sufficient performance by using a small amount of ground truth image data.

It is possible to consider using image data photographed from various cameras with different properties in a single model, but cameras with different properties may have a variety of differences in color, scale, distortion, and the like. Thus, a method for providing consistent outputs despite such differences is required.

Because cameras mounted in mobility devices have difference locations and types, the above-described problem may also occur to autonomous mobility devices. The subject matter described in this background section is intended to promote an understanding of the background of the disclosure and thus may include subject matter that is not already known to those of ordinary skill in the art.

### SUMMARY

The present disclosure is technically directed to a method and a mobility device for generating aligned image data through an aligning parameter generated by an image transformation artificial intelligence (AI) model that similarly transforms image data photographed from cameras with different properties by using an adversarial training technique.

The technical problems solved by the present disclosure are not limited to the above technical problems. Other technical problems, which are not described herein, should be clearly understood by a person having ordinary skill in the art to which the present disclosure belongs, from the following descriptions.

A method may be performed by an apparatus for generating aligned image data through an aligning parameter generated by an image transformation artificial intelligence (AI) model. The method may include, through an encoder of the image transformation AI model, generating at least one aligning parameter from a first camera property and a second camera property related to a first camera and a second camera respectively. The method may also include, through an image transformer of the image transformation AI model, transforming, based on the at least one aligning parameter and a brightness parameter, first image data photographed by the first camera to be aligned with second image data photographed by the second camera. The method may also include training the encoder and a discriminator of the image transformation AI model by adversarial training. The image transformation AI model discriminates between the transformed first image data and the second image data.

The first camera property and the second camera property may include at least one of an intrinsic parameter or a distortion coefficient of each of the first camera and the second camera.

The at least one aligning parameter may include at least one of a crop parameter for removing a predetermined area or a projection matrix for projecting the first image data onto the second image data.

Transforming may include projecting the first image data based on the projection matrix. Transforming may include removing the predetermined area by reflecting the crop parameter in the projected first image data. Transforming may include adjusting brightness by applying the brightness parameter to the first image data with the predetermined area being removed. Transforming may include performing a resizing operation to match a size of the first image data with the brightness to a size of the second image data.

Transforming may include removing the predetermined area of the first image data based on the crop parameter. Transforming may include projecting the first image data by reflecting the projection matrix onto the first image data with the predetermined area being removed. Transforming may include adjusting brightness by applying the brightness parameter to the projected first image data. Transforming may include performing a resizing operation to match a size of the first image data with the brightness to a size of the second image data.

The brightness parameter may be a parameter learnable based on a loss of the discriminator caused by the brightness parameter, independently of a loss of the discriminator caused by the encoder.

The method may also include subordinating the crop parameter and the projection matrix to the trained encoder and determining the crop parameter and the projection matrix by regression.

Adjusting the brightness may include multiplying a first element of the brightness parameter by a full pixel and adding a second element of the brightness parameter to a full pixel.

The method may also include discriminating, by the discriminator, between truth and falsehood regarding whether the transformed first image data is photographed by the second camera. The method may also include training the discriminator to determine falsehood. The method may also include learning the encoder and the brightness parameter to be determined as truth by the discriminator.

The method may also include performing, by the encoder, normalization for the first camera property and the second camera property being input and the crop parameter and the projection matrix being output, to a predetermined range.

A mobility device may include a memory configured to store at least one instruction; and a processor configured to execute the image transformation AI model through the at least one instruction stored in the memory based on data obtained from the memory. The processor is further configured to, through an encoder of the image transformation AI model, generate at least one aligning parameter from a first camera property and a second camera property related to a first camera and a second camera respectively. The processor is further configured to, through an image transformer of the image transformation AI model, transform, based on the at least one aligning parameter and a brightness parameter, first image data photographed by the first camera to be aligned with second image data photographed by the second camera. The encoder and a discriminator of the image transformation AI model are trained by adversarial training. The image transformation AI model discriminates between the transformed first image data and the second image data.

The features of the present disclosure, which are briefly summarized herein, are only examples of aspects of features of the present disclosure, and detailed description of the disclosure which follows and are not intended to limit the scope of the present disclosure.

The technical problems solved by the present disclosure are not limited to the above mentioned technical problems. Other technical problems solved by the present disclosure, which are not described herein, should be more clearly understood by a person having ordinary skill in the art of technical field to which the present disclosure belongs, from the following descriptions.

According to the present disclosure, it is possible to provide a method and a mobility device for generating aligned image data through an aligning parameter generated by an image transformation AI model that similarly transforms image data photographed from cameras with different properties by using an adversarial training technique.

Also, according to the present disclosure, it is possible to generate an aligning parameter capable of aligning an image by considering different features of images and a brightness parameter.

Also, according to the present disclosure, even when a vision task is performed using image data photographed from different cameras, it is possible to secure sufficient inference performance by aligning the image data.

Also, according to the present disclosure, it is possible to reduce an economic cost for securing ground truth data for training a suitable deep learning model for each camera by matching a data distribution of image data photographed from cameras with different geometric properties.

Also, according to the present disclosure, even when data distributions of image data are matched and a single deep learning model that is relatively simple is used, it is possible to secure consistent inference performance based on image data photographed from a plurality of cameras with different geometric properties.

Also, according to the present disclosure, by using an image transformation AI model that automatically manipulates an image, it is possible to consistently transform a plurality of images into an optimal result based on a global optimum.

The effects obtainable from the present disclosure are not limited to the above-mentioned effects, and other effects not mentioned herein should be clearly understood by those having ordinary skill in the art through the following descriptions.

### BRIEF DESCRIPTION OF THE DRAWINGS

FIG. 1 shows an example of a mobility device communicating with another device to transmit and receive data.
FIG. 2 shows an example of constituent modules of a mobility device according to the present disclosure.
FIG. 3 shows an example of constituent modules of a server according to the present disclosure.
FIG. 4 shows an example of a functional configuration included in an image transformation artificial intelligence (AI) model according to the present disclosure.
FIG. 5 is a flowchart illustrating a process of generating aligned image data according to the present disclosure.
FIG. 6 is a flowchart illustrating a detailed process of transforming image data to generate aligned image data.
FIG. 7 is a flowchart illustrating a process of training an image transformation AI model according to the present disclosure.
FIG. 8 shows an example of BackWard of an image transformation AI model according to the present disclosure.

### DETAILED DESCRIPTION

Examples of the present disclosure are described in detail with reference to the accompanying drawings so that those having ordinary skill in the art may easily implement the present disclosure. However, examples of the present disclosure may be implemented in various different ways, and thus the present disclosure is not limited to the examples described therein.

In describing examples of the present disclosure, well-known functions or constructions have not been described in detail because a detailed description thereof may have unnecessarily obscured the gist of the present disclosure. The same or equivalent constituent elements in the drawings are denoted by the same reference numerals, and a repeated or duplicative description of the same elements has been omitted.

In the present disclosure, when an element is referred to as being "connected to", "coupled to", or "linked to" another element, this may mean that an element is "directly connected to", "directly coupled to", or "directly linked to" another element or this may mean that an element is connected to, coupled to, or linked to another element with another element intervening therebetween. In addition, when an element "includes" or "has" another element, this means that one element may further include another element without excluding another component unless specifically stated otherwise.

In the present disclosure, the terms first, second, etc. are only used to distinguish one element from another and do not limit the order or the degree of importance between the elements unless specifically stated otherwise. Accordingly, a first element in an example may be termed as a second element in another example, and similarly a second element in an example could be termed as a first element in another example, without departing from the scope of the present disclosure.

In the present disclosure, elements are distinguished from each other for clearly describing each feature, but this does not necessarily mean that the elements are separated. In other words, a plurality of elements may be integrated in one hardware or software unit, or one element may be distributed and formed in a plurality of hardware or software units. Therefore, even if not mentioned otherwise, such integrated or distributed examples are included in the scope of the present disclosure.

In the present disclosure, elements described in various examples do not necessarily mean essential elements, and some of the elements may be optional elements. Therefore, an example including a subset of elements described in an example is also included in the scope of the present disclosure. In addition, examples including other elements in addition to the elements described in the various examples are also included in the scope of the present disclosure.

The advantages and features of the present disclosure and the ways of attaining the advantages and features should become apparent to those having ordinary skill in the art with reference to examples of the present disclosure described below in detail in conjunction with the accompanying drawings. The examples of the present disclosure, however, may be embodied in many different forms, and the present disclosure should not be constructed as being limited to the example examples set forth herein. Rather, the examples described herein are provided to make the present disclosure more complete and to fully convey the scope of the present disclosure to those having ordinary skill in the art to which the present disclosure pertains.

In the present disclosure, each of phrases such as "A or B", "at least one of A and B", "at least one of A or B", "A, B or C", "at least one of A, B and C", and each of the phrases such as "at least one of A, B or C" and "at least one of A, B, C or combination thereof" may include any one or all possible combinations of the items listed together in the corresponding one of the phrases.

In the present disclosure, expressions of location relations used in the present specification, such as "upper", "lower", "left" and "right", are employed for the convenience of explanation, and when the drawings illustrated in the present disclosure are inversed, the location relations described in the present disclosure may be understood as inversed. When a controller, module, component, device, element, or the like of the present disclosure is described as having a purpose or performing an operation, function, or the like, the controller, module, component, device, element, or the like should be considered herein as being "configured to" meet that purpose or perform that operation or function. Each controller, module, component, device, element, and the like may separately embody or be included with a processor and a memory, such as a non-transitory computer readable media, as part of the apparatus.

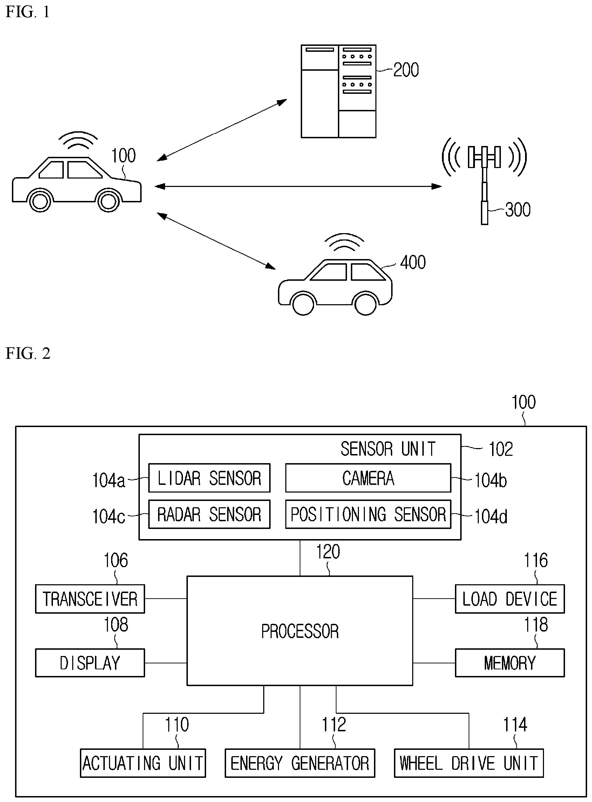

FIG. 1 and FIG. 2 illustrate a mobility device according to the present disclosure. A method for generating aligned image data through an aligning parameter generated by an image transformation artificial intelligence (AI) model according to the present disclosure is applied to the mobility device.

FIG. 1 is a view illustrating a mobility device communicating with another device to transmit and receive data.

Referring to FIG. 1, a mobility device 100 may be driven based on electric energy or fossil energy. In the case of electric energy, for example, the mobility device 100 may be a pure battery-based mobility driven only by a high-voltage battery or employ a gas-based fuel cell as an energy source. In addition, the fuel cell may use various types of gas capable of generating electric energy, and for example, the gas may be hydrogen. However, without being limited thereto, various gases are applicable. In the case of fossil energy, the mobility device 100 is driven based on fuels, such as gasoline, diesel, or liquefied gas, and may be equipped with an engine that drives a wheel drive unit 114 by combustion of the fuel. The engine may be included in an energy generator 112 for providing a driving torque of a wheel to the wheel drive unit 114.

The mobility device 100 may refer to a moving object capable of physically moving through space. Specifically, the mobility device 100 may be a vehicle when a ground moving object driven on the ground and may be a normal passenger vehicle or commercial vehicle, a purpose built vehicle (PBV), and the like. The mobility device 100 may be a four-wheel vehicle, for example, a sedan, a sports utility vehicle (SUV), and a pickup truck and may also be a vehicle with five or more wheels, for example, a bus, a lorry, a container truck, and a heavy vehicle. In addition, the mobility device 100 may include a means of aerial transportation, such as an airplane, a drone, and a helicopter and may also include, without being limited thereto, a means of transportation capable of moving in the sea, such as a ship and a submarine.

The mobility device 100 may be driven by being controlled in autonomous driving, and the autonomous driving may be implemented as semi-autonomous driving or full autonomous driving. Full autonomous driving may be provided as autonomous moving under the complete control of a processor 120 of the mobility device 100 without a user's intervention even in an uncertain driving situation. Semi-autonomous driving may be provided as autonomous moving that requires a driver's intervention in a specific driving situation. When the driving situation occurs, semi-autonomous driving may be implemented such that the processor 120 disables autonomous driving and switches control to the user, and thus the user performs manual driving. According to the autonomous driving levels defined by the Society of Automotive Engineers (SAE), semi-autonomous driving may correspond to the autonomous driving levels 1 to 4, and full autonomous driving may correspond to the level 5.

Meanwhile, the mobility device 100 may communicate with other devices 200 and 300 or another mobility device 400. For example, another device may include a server 200 for supporting various control, state management, and driving of the mobility device 100, an intelligent transportation system (ITS) device 300 for receiving information from an ITS, and various types of user devices. For example, the server 200 is an external device operated by a mobility manufacturer or provided for an autonomous driving service and may receive connected data of the mobility device 100 or may transmit data necessary for autonomous driving. In order to support autonomous driving and various services for the mobility device 100, the server 200 may transmit various types of information and software modules used for controlling the mobility device 100 to the mobility device 100 in response to a request and data transmitted from the mobility device 100 and a user device. According to the present disclosure, the server 200 may transmit an image transformation AI model to the mobility device 100.

For example, the ITS device 300 may be a road side unit (RSU), and the ITS device 300 may assist a user in driving his own car or support autonomous driving of the mobility device 100 by exchanging mobility recognition data, driving control and situation data, environment data surrounding a mobility, and map data through V2I with the mobility device 100. Through V2V with the mobility device 400, the mobility device 100 may support a driver to drive a car on his or her own or perform autonomous driving by exchanging the above-listed data.

The mobility device 100 may communicate with another mobility or another device based on cellular communication, wireless access in vehicular environment (WAVE) communication, dedicated short range communication (DSRC) or short range communication, or any other communication scheme.

For example, the mobility device 100 may use LTE as a cellular communication network, a communication network such as 5G, a WiFi communication network, a WAVE communication network, and the like to communicate with the server 200, the ITS device 300, and the mobility 400. As another example, DSRC used in the mobility device 100 may be used for mobility-to-mobility communication. A communication scheme among the mobility device 100, the server 200, the ITS device 300, the mobility device 400, and a user device is not limited to the above-described embodiment.

FIG. 2 is a view showing constituent modules of a mobility device according to the present disclosure.

The mobility device 100 may include a sensor unit 102, a transceiver 106, a display 108, an actuating unit 110, the energy generator 112, the wheel drive unit 114, a load device 116, a memory 118, and the processor 120. Each constituent element is not a necessary constituent element, an additional configuration may be provided or omitted, and one configuration may be included in another configuration or be combined therewith so that a single configuration may perform a plurality of functions.

The sensor unit 102 may be equipped with various types of detectors for sensing various states and situations occurring in external and internal environments of the mobility device 100 and for identifying location information of the mobility device 100. In other words, the sensor unit 102 may be configured as a multi-sensor module including heterogeneous sensors to obtain sensing data detected from each of the sensors.

Specifically, the sensor unit 102 may be equipped with a Lidar sensor 104a, a camera 104b as a video sensor, a radar sensor 104c for recognizing dynamic and static objects present around the mobility device 100, and a positioning sensor 104d capable of obtaining location information of the mobility device 100. The sensor unit 102 may obtain sensor data including three-dimensional recognition data, perception/observation data, and positioning information by the above-described sensors. A three-dimensional (3D) perception sensor corresponds to Lidar data, and these two terms may be used interchangeably below. Perception/observation data may include image data for a camera and radar data.

The Lidar sensor 104a may be a type of 3D recognition sensor according to the present disclosure, and the terms `Lidar sensor' and `3D recognition sensor' may be used interchangeably below. The Lidar sensor 104a may be a sensor that observes a surrounding environment based on laser scanning and perceives a three-dimensional shape of an object. Specifically, the Lidar sensor 104a may obtain three-dimensional recognition data for a surrounding environment and an object by scanning laser around the mobility device 100. Three-dimensional recognition data may include a point cloud representing a three-dimensional shape of an object, i.e., detection data and image data for observation representing a surrounding environment. For example, detection data may be provided to identify each object by representing three-dimensional contours and shapes of objects and an arrangement of objects. For example, image data may be provided to identify an object and a surrounding environment through images of the object and the surrounding environment.

The camera 104b may obtain two-dimensional image data for the environment and objects around the mobility device 100 or image data with depth information. According to the present disclosure, because the camera 104b may include different geometric properties, each camera 104b may be configured with different internal parameters and external parameters.

Specifically, because the camera 104b according to the present disclosure is configured each with a different focal length, a different field of view (FOV), a lens distortion, a different focus, a lens angle, a different resolution, a different point of view (POV), a different distortion coefficient, a different camera location (translation), and a different camera direction (rotation), each camera 104b may obtain image data photographed with different geometric properties.

For example, the radar sensor 104c may scan an electromagnetic wave with a predetermined wavelength and may detect the behavior of an object based on the electromagnetic wave reflected from the object. For example, the behavior of an object may include the presence of the object, whether the object moves, a distance between the mobility device 100 and the object, a speed of the object, and a movement direction.

Apart from the positioning sensor 104d, the sensor unit 102 may be equipped with a gyro sensor, an acceleration sensor, a wheel sensor, an autometer, a speed sensor and the like, in order to identify its own location, driving position, and speed. In addition, to monitor a user inside the mobility device 100, a condition of an occupant, and an operating situation of an internal device of the mobility device 100 that a user is capable of maneuvering, the sensor unit 102 may have an inward-facing camera 104b, a biosensor for detecting biosignals of a driver and an occupant, and various detection modules for detecting the operation and state of an internal device.

The present disclosure mainly describes sensors of the sensor unit 102 to describe an embodiment but may further include a sensor for detecting various situations not listed herein.

The transceiver 106 may support mutual communication with the server 200, the ITS device 300, and the mobility device 400. In the present disclosure, the transceiver 106 may transmit image data generated or stored during driving to the server 200 and may also receive image or AI model data from the server 200. In the present disclosure, the mobility device 100 may transmit and receive data used in the method according to the present disclosure to and from the outside through the transceiver 106. According to an embodiment of the present disclosure, the AI model data may be an image transformation AI model that is trained.

The display 108 may serve as a user interface. By the processor 120, the display 108 may display an operating state and a control state of the mobility device 100, path/traffic information, information on an energy remaining quantity, a content requested by a driver, and the like to be output. The display 108 may be configured as a touch screen capable of sensing a driver input and receive a request of a driver indicated to the processor 120.

A user may activate or deactivate an autonomous driving function through a soft-type interface like a touch of the display 108 or a hard-type interface provided in a predetermined position inside the mobility device 100. In the case of a hard-type interface, for example, a button or key for an autonomous driving function may be installed on a steering wheel, a dashboard, and the like. In addition, the interfaces may be configured to provide detailed options for selecting various functions provided at a corresponding level of autonomous driving.

Meanwhile, the mobility device 100 may include the actuating unit 110, the energy generator 112, the wheel drive unit 114, and the load device 116.

The actuating unit 110 may be equipped with at least one module for implementing a driving operation and may perform at least one driving operation of longitudinal control like acceleration/deceleration and transverse control like steering. The actuating unit 110 may be equipped with not only a pedal and a steering wheel accepting a user's request for the control but also various operating modules for generating a driving operation according to the request in the wheel drive unit 114.

The energy generator 112 may generate and supply power and electricity used for a driving power system like the wheel drive unit 114 and the load device 116. When the mobility device 100 is driven based on electric energy, for example, the energy generator 112 may be configured as an electric battery or be configured as a combination of an electric battery and a fuel cell for charging the battery. In the case of a combination of an electric battery and a fuel cell, the energy generator 112 may include a tank for storing a material used to produce power of the fuel cell, for example, hydrogen gas. When the mobility device 100 is driven based on fossil energy, the energy generator 112 may be configured as an internal combustion engine.

The wheel drive unit 114 may include a plurality of wheels, a driving force transfer module for generating and giving a driving force to wheels or for transferring a driving force, a braking module for decelerating the driving of wheels, and a steering module for realizing transverse control of wheels. When the mobility device 100 is driven based on electric energy, a driving force transfer module may be configured as a motor module that generates a driving force based on electric power output from an electric battery. When the mobility device 100 is operated based on fossil energy, a driving force transfer module may be equipped with transmission and a gear module that transfer power of an internal combustion engine.

The load device 116 may be an auxiliary equipment mounted on the mobility device 100, which consumes power supplied from the energy generator 112 by use of an occupant or user or converted from output of the energy generator 112. In the present disclosure, the load device 116 may be a type of electric device for non-driving purpose excluding a driving power system like the wheel drive unit 114. For example, the load device 114 may be various devices installed in an air-conditioning system, a light system, a seat system, and the mobility device 100.

In addition, the mobility device 100 may include the memory 118 and the processor 120.

The memory 118 may store an application for controlling the mobility device 100 and various data and load the application or read and record data at a request of the processor 120. In the present disclosure, for image data obtained from the camera 104b or the server 200, the memory 118 may generate at least one aligning parameter from a first camera property and a second camera property related to each geometric property of different cameras (hereinafter, a first camera and a second camera) with different geometric properties through an encoder of an image transformation AI model. The memory 118 may store an application and at least one instruction for transforming first image data photographed by a camera (first camera) including the first camera property to be aligned with second image data photographed by a camera (second camera) including the second camera property through a transformer of the image transformation AI model based on an aligning parameter and a brightness parameter. In addition, the memory 118 may have an AI model capable of performing a vision task using transformed (or aligned) first image data. Specifically, through an AI model that performs vision tasks, the memory 118 may store an application and at least one instruction for performing vision tasks, such as a semantic segmentation task, object detection, and depth estimation, by using transformed first image data.

The AI model, which performs vision tasks, may be trained based on 3D recognition data, image data, radar data, and location data that are already collected from the mobility device 100, the server 200, and the mobility device 400, and the AI model may be a deep neural network, such as a convolutional neural network (CNN). The AI model, which performs vision tasks, may be updated based on data that is collected in real time during driving.

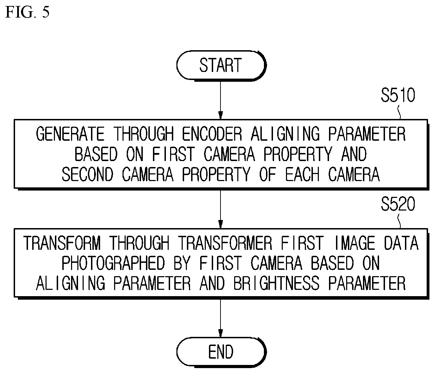

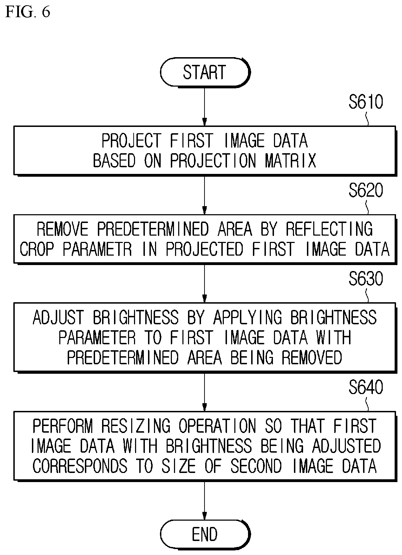

The processor 120 may perform overall control of the mobility device 100. The processor 120 may be configured to execute an application and an instruction stored in the memory 118. The processor 106 may be implemented as a single processing module, processing of some cases may be distributively performed in a plurality of processing modules, and the processor 106 may commonly refer to a plurality of processing modules in the present disclosure. The above-described processing of the processor 120 is described in detail through FIG. 5 and FIG. 6.

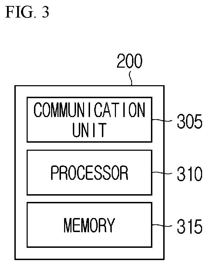

With reference to FIG. 3, the server 200 implementing a method for training an image transformation AI model not only generating an aligning parameter according to the present disclosure but also generating an aligned image data through the generated aligning parameter.

FIG. 3 is a view schematically showing constituent modules of a server according to the present disclosure.

Referring to FIG. 3, the server 200 may include a communication unit 305, a processor 310, and a memory 315. Each of the constituent elements is not an indispensable element, and an additional configuration may be provided or omitted. One configuration may be included in or combined with another configuration so that a single configuration may perform a plurality of functions.

According to the present disclosure, the server 200 may train an image transformation AI model that generates aligned image data through an aligning parameter generated by the image transformation AI model.

Specifically, the server 200 may discriminate between first image data and second image data that are transformed by an aligning parameter and a brightness parameter generated by an encoder of an image transformation AI model and may train the image transformation AI model through adversarial training of the encoder and a discriminator. The training process is described below.

The server 200 may distribute an image transformation AI model capable of image data photographed from each of a plurality of cameras with different geometric properties to the mobility device 100 so that the mobility device 100 may use the image transformation AI model for driving control.

According to the present disclosure, like the transceiver 106 of the mobility device 100, the communication unit 305 may collected image data and AI model data to the mobility device 100. The communication unit 305 may be a communication interface that not only receives various data and networks (or algorithms) used for training an image transformation AI model supporting driving and convenience functions of the mobility device 100 but also transmits information and a network related to the image transformation AI model to the mobility device 100. In addition, the communication unit 305 may be a communication module that not only data generated or stored during driving from the mobility device 100 but also transmits information supporting driving, such as map information, environment information for perceiving an object around the mobility device 100, traffic information, and weather information to the mobility device 100. The communication unit 305 may be a communication module that transmits an application related to driving and convenience functions.

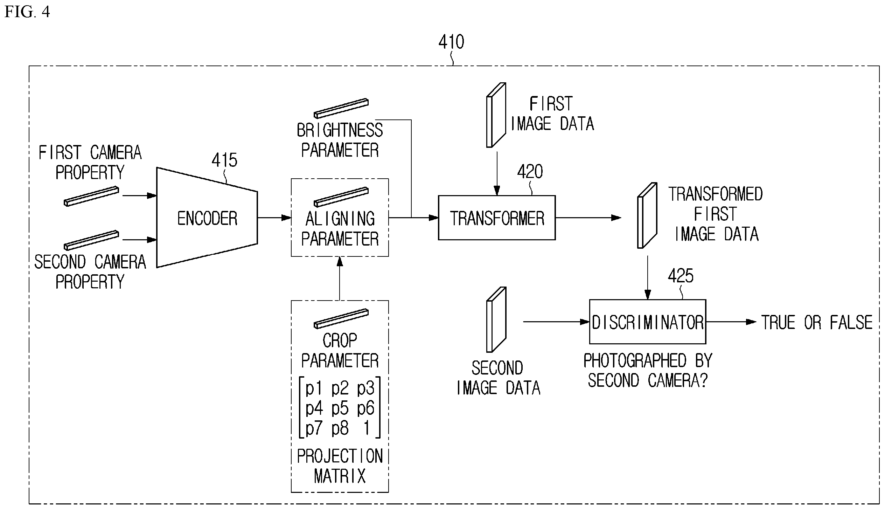

The memory 315 may store a program for controlling the server 200 and various data and may load the program or may read and record the data at a request of the processor 310. According to the present disclosure, the memory 315 may manage an image transformation AI model and image data with different geometric properties for training the model. The image transformation AI model may be configured to include the functional configurations 415, 420, and 425 illustrated in FIG. 4. Image data used for training may be collected from a plurality of mobility devices 100 and 400 and/or conventional DB for training data.

The processor 310 may perform overall control of the server 200. The processor 310 may be configured to execute applications and instructions stored in the memory 315. Specifically, the processor 310 may control the server 200 to train an image transformation AI model held in the memory 315 by using image data for training and to distribute the trained image transformation AI model to the mobility device 100.

In the present disclosure, an image transformation AI model used in the mobility device 100 may be a completely trained model, and a trained image transformation AI model may be referred to as an image transformation AI model in the mobility device 100.

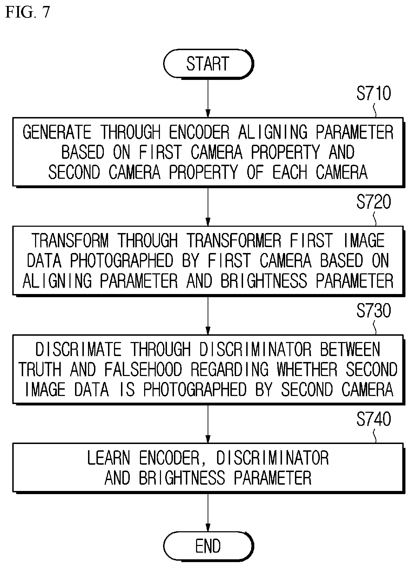

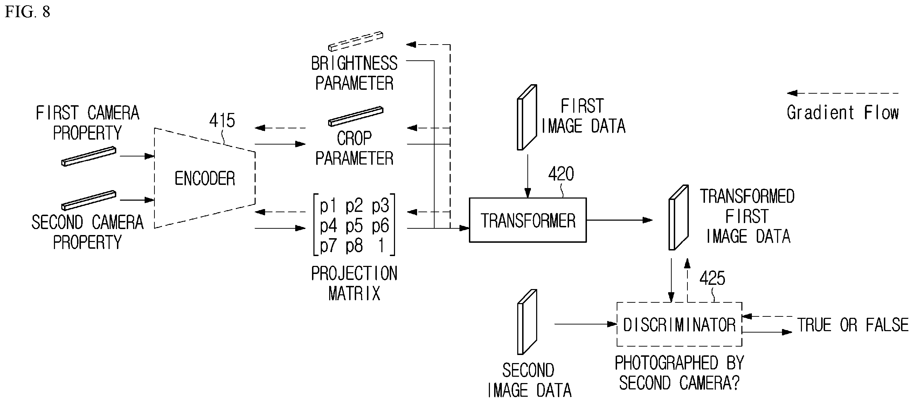

Through a training process, the processor 310 may determine the value of a learnable parameter of a functional configuration constituting an image transformation AI model. A learnable parameter and an adversarial training process for determining the learnable parameter are described through FIG. 7 and FIG. 8.

In addition, the processor 310 may receive feedback information according to an operation of an image transformation AI model distributed to the mobility device 100 and data of a same type as image data from the mobility device 100 and may update the image transformation AI model based on the received information and data.

The processor 310 may be implemented as a single processing module, and because processing in some situations may be distributively handled by a plurality of processing modules, the processor 310 may commonly refer to a plurality of processing modules in the present disclosure.

Hereinafter, in relation to a method for generating aligned image data according to the present disclosure, constituent elements of an image transformation AI model are described through FIG. 4 and FIG. 5.

FIG. 4 is a view showing a functional configuration included in an image transformation AI model according to the present disclosure. In FIG. 4, the configuration included in the image transformation AI model may actually implement generation of an aligning parameter and generation of aligned image data through the generated aligning parameter according to the present disclosure.

FIG. 5 is a flowchart illustrating a process of generating aligned image data according to the present disclosure.

The processor 120 of the mobility device 100 may process requests from the configurations illustrated in FIG. 4. In an embodiment of the present disclosure, the mobility device 100 is mainly described to generate aligned image data by using a trained image transformation AI model and to train the image transformation AI model in the server 200. However, without deviating from the description below. The processing may be distributively handled or interchanged. For example, the mobility device 100 may train the image transformation AI model, or the server 200 may generate aligned image data by using the trained image transformation AI model and may perform a vision task through the aligned image data.

Hereinafter, the processor 120 of the mobility device 100 and the processor 310 of the server 200 are abbreviated to the mobility device 100 and the server 200 respectively, or these terms may be used interchangeably.

An image transformation AI model 410 may include an encoder 415, a transformer 420, and a discriminator 425. A first camera property and a second camera property, which are input into the encoder 415, may mean properties related to geometric properties of each of a first camera and a second camera with different geometric properties mounted in the mobility device 100.

Specifically, a property related to a geometric property may mean an intrinsic parameter intrinsic to a camera or an extrinsic parameter that is determined by an external factor according to a mounting position.

A property related to a geometric property input into the encoder 415 may be an intrinsic parameter. Without being limited thereto, a distortion coefficient may be added to a specific intrinsic parameter and may be input into the encoder 415. As an example, according to the present disclosure, for a first camera property and a second camera property related to an intrinsic parameter input into the encoder 415, each of a focal length, a FOV, a lens distortion, a focus, a lens angle, a resolution, a point of view, and a distortion coefficient or a combination of the above-described intrinsic parameters may be input.

A property related to a geometric property of a camera, which may be input into the encoder 415, is not limited thereto, and each of an intrinsic parameter and an extrinsic parameter available for generating aligned image data or a combined value thereof may be input.

A first camera property and a second camera property of a first camera and a second camera respectively may be values that are calculated in advance through calibration. According to the present disclosure, an image transformation AI model may have a first camera property and a second camera property, which are calculated in advance, for input of the encoder 415 but may have, in a front end of the encoder 415, a separate module for calculating the camera properties.

The processor 120 generates an aligning parameter based on a first camera property and a second camera property of a first camera and a second camera respectively with different geometric properties through the encoder 415 (S510).

The aligning parameter means a parameter for aligning image data photographed from different cameras with different geometric properties. As an example, an aligning parameter according to the present disclosure may include a crop parameter for removing a predetermined area of image data and a projection matrix for projecting onto specific image data.

As an example, the crop parameter may include a parameter for removing a predetermined position, such as top, bottom, left-hand, right-hand, or center areas of image data, according to a predetermined ratio or size. For example, the crop parameter of the present disclosure may consist of 4 parameters for partially removing top, bottom, left-hand, and right-right areas of first image data photographed by a camera including a first camera property.

In a process of training an image transformation AI model according to the present disclosure, a crop parameter may be a value that is subordinate to an encoder of the trained image transformation AI model and is determined by regression. In the present disclosure, the crop parameter may be a value determined by an encoder that outputs a desired value from a first camera property and a second camera property as input.

According to the present disclosure, the projection matrix may be a matrix that projectively transforms first image data to second image data photographed by a camera including a second camera property.

In order to align image data, the encoder 415 may generate, apart from the projection matrix, a matrix that performs translation, rotation, scaling, shearing, and reflection. As an example, the encoder 415 may generate an affine matrix, a similarity matrix, and a Euclidean matrix.

The processor 120 may normalize the first camera property and the second camera property, which are input through the encoder 415, and the crop parameter and the projection matrix, which are output, to a predetermined range. As an example, the values of the output crop parameter and projection matrix may be normalized to a range of [0, 1]. Through normalization, the processor 120 may improve stability in a process of training an image transformation AI model to be described below and may reduce the time of training. The encoder 415 may be trained through adversarial training with the discriminator 425.

Next, the processor 120 transforms the first image data photographed by the first camera including the first camera property based on the aligning parameter and a brightness parameter through the transformer of the image transformation AI model (S520).

Specifically, through the transformer 420, the processor 120 transforms the first image data to be aligned with the second image data photographed by a camera including the second camera property.

As an example, the transformer 420 may use the crop parameter, the projection matrix and the brightness parameter to transform the first image data. Furthermore, the transformer 420 may use a size of the second image data (e.g., resolution) to perform a resizing operation that adjusts a size of the first image data. The above-described transforming process is described in detail through FIG. 6.

The brightness parameter may mean a value that is configured by a parameter capable of adjusting brightness of image data. The brightness parameter may prevent the discriminator 420 from easily determining truth or falsehood based on a difference of exposure values of a camera in a process of training the encoder 415 and the discriminator 420. As an example, the brightness parameter may consist of a first element, which is multiplied by a full pixel of image data and thus adjusts the brightness of the full pixel, and a second element that is added to the full pixel and thus adjusts the brightness of the full pixel.

According to the present disclosure, the brightness parameter may be configured as a learnable parameter. In a training process, the brightness parameter is independent of loss of the discriminator 420 caused by a weight of the encoder 415 and may be learned based on loss of the discriminator 420 caused by the brightness parameter.

According to the present disclosure, as the crop parameter, the projection matrix and the brightness parameter are configured with relatively small parameters or elements, the mobility device 100 may transform image data at a fast speed. In addition, as the mobility device 100 generates the above-described parameters capable of automatically transforming an image, the mobility device 100 may consistently transform a plurality of image datasets into an optimal result based on a global optimum.

The mobility device 100 may perform a vision task by using a deep learning model that has been trained to be suitable for cameras with different geometric properties by using transformed image data. As an example, the mobility device 100 may use a deep learning model, which has been trained based on a second image dataset photographed by a camera including a second camera property, to analyze transformed first image data.

The discriminator 425 may be frozen in the mobility device 100 at steps S510 and S520 and in the process of performing a vision task by analyzing the transformed first image data.

The discriminator 425 may be designed as a combination of a convolutional neural network (CNN) and a multi-perceptron layer (MLP). The discriminator 425 may be trained through adversarial training with the encoder 415. The discriminator 425 according to the present disclosure may perform binary classification for determining truth or falsehood, i.e., whether or not the transformed first image data is photographed from a camera including a second camera property based on the second image data.

The training process of the image transformation AI model is described in detail through FIG. 7 and FIG. 8.

Herein, the process of transforming image data through the transformer 420 of the image transformation AI model is described in detail through FIG. 6.

FIG. 6 is a flowchart illustrating a detailed process of transforming image data to generate aligned image data.

First, through the transformer 420, the processor 120 projects the first image data based on the projection matrix that is generated by the encoder 415 (S610). As an example, the projection matrix may be configured as a 3X3 matrix and may generate projected first image data by performing 2D projective transform that maps the first image data to a specific 2D space. Thus, the processor 120 may compensate for a difference of image data according to a difference of intrinsic parameters of cameras.

Next, through the transformer 420, the processor 120 removes a predetermined area by applying the crop parameter to the projected first image data (S620). The transformer 420 may adequately remove an unnecessary portion of the projected first image data by using the crop parameter.

As an example, the crop parameter may remove a portion of the top, bottom, left-hand, and right-hand areas of the projected first image data according to a predetermined ratio or size and may consist of or comprise 4 parameters that determine a position or a ratio of removal for each area.

The order of steps S610 and S620 of the transformer 420 may be changed according to a user or system setting. When the order is changed, because a change is required for the crop parameter and the projection matrix, the encoder 415, the discriminator 420, and the brightness parameter may be differently learned according to the processing order of the transformer 420.

Next, through the transformer 420, the processor 120 adjusts brightness by applying the brightness parameter to the first image data with a predetermined area being removed (S630).

According to the present disclosure, the brightness parameter is learned to offset a difference of brightness of image according to an exposure value of cameras including different geometric properties and thus adjusts brightness so that the first image data with the predetermined area being removed has similar brightness to the brightness of the second image data.

As an example, the brightness parameter may consist of or comprise a first element, which is multiplied by a full pixel of image data and thus adjusts the brightness of the full pixel, and a second element that is added to the full pixel and thus adjusts the brightness of the full pixel. Accordingly, the transformer 420 may match brightness according to linear transform that multiplies the full pixel of the first image data by the first element and adds the second element thereto.

Next, the processor 120 performs a resizing operation through the transformer 420 so that the first image data with brightness being adjusted corresponds to a size of the second image data (S640).

The transformer 420 may use size information such as a resolution of image data to perform the resizing operation of adjusting the size of the image data.

According to the present disclosure, the transformer 420 obtains size information (e.g., resolution) of the second image data and matches the size of the first image data with brightness being adjusted to the size of the second image data.

Specifically, in the resizing process, the sizes may be matched by performing interpolation between pixel values through an interpolation method or by increasing or decreasing horizontal and vertical pixel numbers through a scaling factor.

Through the above-described processing, the processor 120 may transform the first image data photographed by the first camera to be aligned with the second image data photographed by the second camera.

Hereinafter, a process of training an image transformation AI model in the server 200 is described through FIG. 7 and FIG. 8.

FIG. 7 is a flowchart illustrating a process of training an image transformation AI model according to the present disclosure. FIG. 8 is a view showing BackWard of an image transformation AI model according to the present disclosure. The training process described in FIG. 7 may be actually performed by the back propagation operation of FIG. 8.

Specifically, according to the present disclosure, the image transformation AI model may be trained through adversarial training of the encoder 415 and the discriminator 425. Because the discriminator 425 is trained in the server 200 by discriminating truth and falsehood of transformed first image data and second image data, the descriptions of S710 and S720, which are processed in an actually same way as in the mobility device 100 until the transformed first image data, have been omitted.

Accordingly, the description through FIG. 7 mainly focuses on steps S730 and S740, which corresponds to a process of training the encoder 415, the discriminator 425, and a brightness parameter of the image transformation AI model through adversarial training.

The processor 310 of the server 200 discriminates, through the discriminator 425, between truth and falsehood regarding whether or not first image data is photographed by a second camera including a second camera property (S730). In other words, based on second image data, the discriminator 425 may perform binary classification to discriminate between truth and falsehood for transformed first image data.

Next, the processor 310 learns the encoder 415, the discriminator 425, and the brightness parameter based on a loss according to a result of the binary classification of the discriminator 425 (S740). Specifically, the processor 310 performs backpropagation of the loss according to the binary classification result of the discriminator 425 along the dotted arrows of FIG. 8.

In order to deceive the discriminator 425, the encoder 415 may be trained to minimize the size of a loss function, i.e., to generate an aligning parameter for transforming the first image data so that the discriminator 425 determines (or is deceived to determine) the falsely transformed first image data as true.

In order to clearly determine truth or falsehood of the transformed first image data, the discriminator 425 may be trained to maximize the size of the loss function, i.e., to determine the falsely transformed first image data as false.

In other words, similar to the training method of generative adversarial networks (GNNs) that are adversarial generative neural networks, the encoder 415 and the discriminator 425 may be trained through adversarial training.

According to the present disclosure, the image transformation AI model may be trained until a function value of the loss function enters a set convergence range or reaches a specific value. For example, the loss function according to the present disclosure may include binary cross entropy (BCE) but is not limited thereto.

The encoder 415 and the brightness parameter may be trained by a back-propagated loss value of the loss function. A gradient flow in the backpropagation process may be propagated along the dotted arrows of FIG. 8.

If the discriminator 425 determines the transformed first image data as false (i.e., not photographed by the second camera), the processor 310 may provide a loss value of the loss function based on a difference between the transformed first image data and the second image to the encoder 415 and the brightness parameter through backpropagation.

Based on the loss value of the loss function, the processor 310 may update a weight of the encoder 415 to output an aligning parameter that minimizes the difference between the first image data and the second image data.

Likewise, based on the loss value, the processor 310 may train the brightness parameter. Specifically, the brightness parameter may be trained independently of the loss of the discriminator 415 caused by the weight of the encoder 415. The image transformation AI model, which has been completely trained by the above-described processing, may be distributed to the mobility device 100.

While the methods of the present disclosure described above are represented as a series of operations for clarity of description, it is not intended to limit the order in which the steps are performed. The steps described above may be performed simultaneously or in different order as necessary. In order to implement the method according to the present disclosure, the described steps may further include different or other steps, may include remaining steps except for some of the steps, or may include other additional steps except for some of the steps.

The various examples of the present disclosure do not disclose a list of all possible combinations and are intended to describe representative aspects of the present disclosure. Aspects or features described in the various examples may be applied independently or in combination of two or more.

In addition, various examples of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable commands (e.g., an operating system, an application, firmware, a program, etc.) for enabling operations according to the methods of various examples to be executed on an apparatus or a computer, a non-transitory computer-readable medium having such software or commands stored thereon and executable on the apparatus or the computer.

## Claims

1. A method for generating aligned image data through an aligning parameter generated by an image transformation artificial intelligence (AI) model, the method comprising:
through an encoder of the image transformation AI model, generating at least one aligning parameter from a first camera property and a second camera property related to a first camera and a second camera respectively;
through an image transformer of the image transformation AI model, transforming, based on the at least one aligning parameter and a brightness parameter, first image data photographed by the first camera to be aligned with second image data photographed by the second camera; and
training the encoder and a discriminator of the image transformation AI model by adversarial training,
wherein the image transformation AI model discriminates between the transformed first image data and the second image data.

2. The method of claim 1, wherein the first camera property and the second camera property include at least one of an intrinsic parameter or a distortion coefficient of each of the first camera and the second camera.

3. The method of claim 1 or 2, wherein the at least one aligning parameter includes at least one of a crop parameter for removing a predetermined area or a projection matrix for projecting the first image data onto the second image data, wherein, optionally, the method further comprises:
subordinating the crop parameter and the projection matrix to the trained encoder; and
determining the crop parameter and the projection matrix by regression.

4. The method of claim 3, wherein transforming comprises:
projecting the first image data based on the projection matrix;
removing the predetermined area by reflecting the crop parameter in the projected first image data;
adjusting brightness by applying the brightness parameter to the first image data with the predetermined area being removed; and
performing a resizing operation to match a size of the first image data with the brightness to a size of the second image data, wherein, optionally, adjusting the brightness comprises:
multiplying a first element of the brightness parameter by a full pixel; and
adding a second element of the brightness parameter to a full pixel.

5. The method of claim 3 or 4, wherein transforming comprises:
removing the predetermined area of the first image data based on the crop parameter;
projecting the first image data by reflecting the projection matrix onto the first image data with the predetermined area being removed;
adjusting brightness by applying the brightness parameter to the projected first image data; and
performing a resizing operation to match a size of the first image data with the brightness to a size of the second image data.

6. The method of anyone of claims 1-5, wherein the brightness parameter is a parameter learnable based on a loss of the discriminator caused by the brightness parameter, independently of a loss of the discriminator caused by the encoder.

7. The method of anyone of claims 1-6, further comprising:
discriminating, by the discriminator, between truth and falsehood regarding whether the transformed first image data is photographed by the second camera;
training the discriminator to determine falsehood; and
learning the encoder and the brightness parameter to be determined as truth by the discriminator.

8. The method of anyone of claims 3-5 or of anyone of claims 6-7 provided that in combination with claim 3, further comprising:
performing, by the encoder, normalization for the first camera property and the second camera property being input and the crop parameter and the projection matrix being output, to a predetermined range.

9. A mobility device for generating aligned image data through an aligning parameter generated by an image transformation artificial intelligence (AI) model, the mobility device comprising:
a memory configured to store at least one instruction; and
a processor configured to execute the image transformation AI model through the at least one instruction stored in the memory based on data obtained from the memory,
wherein the processor is further configured to:
through an encoder of the image transformation AI model, generate at least one aligning parameter from a first camera property and a second camera property related to a first camera and a second camera respectively; and
through an image transformer of the image transformation AI model, transform, based on the at least one aligning parameter and a brightness parameter, first image data photographed by the first camera to be aligned with second image data photographed by the second camera,
wherein the encoder and a discriminator of the image transformation AI model are trained by adversarial training, and
wherein the image transformation AI model discriminates between the transformed first image data and the second image data.

10. The mobility device of claim 9, wherein the first camera property and the second camera property include at least one of an intrinsic parameter or a distortion coefficient of each of the first camera and the second camera.

11. The mobility device of claim 9 or 10, wherein the at least one aligning parameter includes at least one of a crop parameter for removing a predetermined area or a projection matrix for projecting the first image data onto the second image data,
wherein, optionally, the processor is further configured to perform, through the encoder, normalization for the first camera property and the second camera property being input and the crop parameter and the projection matrix being output, to a predetermined rang.

12. The mobility device of claim 11, wherein the processor is further configured to:
project the first image data based on the projection matrix,
remove the predetermined area by reflecting the crop parameter in the projected first image data,
adjust brightness by applying the brightness parameter to the first image data with the predetermined area being removed, and
transform the first image data to be aligned with the second image data by performing a resizing operation to match a size of the first image data with the brightness to a size of the second image data, wherein, optionally, the processor is further configured to, when adjusting of the brightness:
multiply a first element of the brightness parameter by a full pixel; and
add a second element of the brightness parameter to a full pixel.

13. The mobility device of claim 11 or 12, wherein the processor is further configured to:
remove the predetermined area of the first image data based on the crop parameter,
project the first image data by reflecting the projection matrix onto the first image data with the predetermined area being removed,
adjust brightness by applying the brightness parameter to the projected first image data, and
transform the first image data to be aligned with the second image data by performing a resizing operation to match a size of the first image data with the brightness to a size of the second image data, wherein, optionally, the crop parameter and the projection matrix are subordinate to the trained encoder and are determined by regression.

14. The mobility device of anyone of claims 11-13, wherein the brightness parameter is a parameter learnable based on a loss of the discriminator caused by the brightness parameter, independently of a loss of the discriminator caused by the encoder.

15. The mobility device of anyone of claims 9-14, wherein the processor is further configured to discriminate, through the discriminator, between truth and falsehood regarding whether the transformed first image data is photographed by the second camera,
wherein the discriminator is trained to determine falsehood, and
wherein the encoder and the brightness parameter are learned to be determined as truth by the discriminator.
